# EUROPEAN PATENT APPLICATION

(11) **EP 1 985 529 A1**
(43) Date of publication of application: **29.10.2008**
(21) Application number: 08275009.2
(22) Date of filing: 28.04.2008
(51) Int. Cl.: B62D 59/04

(54) **Drive roller for trailer manoeuvring machine**

(30) Priority: 26.04.2007 GB 0708083
(71) Applicant: Powrwheel Limited, Airspeed Road Christchurch BH23 4HD (GB)
(72) Inventor: The designation of the inventor has not yet been filed
(74) Representative: Targett, Kenneth Stanley

(57) **Abstract**

A drive roller (10) for a trailer manoeuvring machine (38) for frictionally engaging the tread of a tyre of a trailer has its peripheral surface formed with an array of protrusions (26) spaced apart along and around the roller. At least about half (and preferably all) of the protrusions each have a facet (32) that generally lies in a respective plane (35) parallel to the roller axis (37). Preferably, the protrusions are pyramid-shaped.

## Description

This invention relates to drive rollers for trailer manoeuvring machines.

Trailer manoeuvring machines are well-known and are used, for example, to manoeuvre a caravan into a desired parking position after it has been unhitched from its towing vehicle. A popular form of trailer manoeuvring machine is employed in pairs. Each machine comprises a drive roller which is mounted on the trailer and can selectably be brought into and out of frictional engagement with the tyre tread of a respective road wheel of the trailer. Each machine includes a motor which can rotate the roller about its axis so as to rotate the respective trailer wheel. By controlling the relative rotations of the motors of the two drive machines, it is possible to move the trailer forwards or backwards in a straight line, forwards or backwards in a turn to the right or left, and to perform a spin turn of the trailer in either direction about its centre.

A common form of such roller comprises a metal cylinder which is coated with irregularly-shaped grit particles randomly adhered to the surface of the cylinder by resin in order to increase friction between the roller and the tyre tread. There is a limit to the size of the grit that can be used. If it is too large, the resin bond between the grit particle and the cylinder breaks too easily. However, it is desirable to have large irregularities in the surface of the roller so as to improve the frictional grip. Other desiderata in the design of such drive rollers are that the roller should be inexpensive to produce, that its surface irregularities should not easily clog with mud, and that it should not damage the tyre tread.

A drive roller has recently been proposed in patent document EP1757515A1 (Reich) in the form of an extruded or moulded metal or plastics body which is generally cylindrical but which has alternate deep and shallow grooves formed in its peripheral surface extending in a direction parallel to the roller axis. A problem with this roller is that when it is used to move a trailer over muddy ground, the deep grooves will fill with mud which, once dried, will reduce the grip of the roller on the tyre tread. Furthermore, the edges of the grooves are acutely angled so that (i) there is an increased risk of damage to the tyre tread by slicing, and (ii) the groove edges can be easily damaged by gravel and other stones picked up by the tyre tread. Moreover, the deep grooves have generally parallel sides so that gravel of an appropriate size can become trapped in them.

Other drive rollers have also recently been proposed in patent document EP1702835A1 (Truma). In one form, the drive roller is generally cylindrical but with a sinusoidal ripple extending around its periphery so that grooves are formed extending in a direction parallel to the roller axis. In another form, each groove extends helically around and along the roller surface. Again, these rollers have the disadvantage that when they is used to move a trailer over muddy ground, the grooves will fill with mud which, once dried, will reduce the grip of the roller on the tyre tread. These rollers are less likely to damage the tyre tread than the roller of EP1757515A1, but at the expense of reduced grip between the roller and tyre tread.

An aim of the present invention, or at least of specific embodiments of it, is to provide a drive roller that, at least to some extent, overcomes the disadvantages of the various known drive rollers discussed above.

In accordance with a first aspect of the present invention, there is provided a drive roller for a trailer manoeuvring machine, which, as is known from the gritted drive roller, is generally cylindrical and has means to enable the roller to be supported in engagement with a tyre tread of a wheel of a trailer and to be rotated about its axis so that frictional engagement between the roller and tread causes the wheel to rotate, the roller having its peripheral surface formed with an array of protrusions spaced apart along and around the roller. The drive roller of the present invention is characterised in that at least about half of the protrusions (and preferably substantially all of them) each have a facet that generally lies in a respective plane parallel to the roller axis. These facets can provide good grip between the roller and the tyre tread when the roller is being turned in the direction in which the facets face. Although some of the grit particles used in the conventional gritted roller may have facets, the particles are randomly oriented on the roller so that they do not provide this effect to any significant extent. Unlike the rollers of EP1702835A1 and EP1757515A1, the roller of the present invention has protrusions that are spaced apart along and around the roller so that long uninterrupted channels are not formed. When mud collects and dries in long uninterrupted channels, pressure subsequently applied by the tyre tread acts uniformly on the mud so that it has little dislodging effect on the mud. However, with the present invention, when pressure is applied by a tyre, the mud tends to crack and fall away from the roller.

In order to obtain the grip advantage when the roller is to be used for driving in either direction, at least about half of the protrusions (and preferably substantially all of them) each preferably have a facet that generally lies in a respective oppositely-inclined plane parallel to the roller axis.

It has been found that the roller is particularly effective if each of at least a majority of the protrusions is generally in the form of a rectangularly-based pyramid. Each of at least a majority of the pyramids preferably measures at least about 5 mm x 5 mm and/or no more than about 8 mm x 8 mm. The facets of each pyramid are preferably inclined at an angle of about 45 degrees to the pyramidal axis, so that the pyramid does not present an acute angle at its apex. Each of at least a majority of the protrusions preferably rises to a height of at least about 2 mm and/or no more than about 3.5 mm above a circularly-cylindrical base surface of the roller.

The roller may be cast, moulded or machined. In order to simplify machining of the pattern, mould or roller, the protrusions preferably form a regular array. They are preferably arranged in lines parallel to the roller axis. More preferably, the protrusions in each line are staggered with respect to the protrusions in the immediately adjacent lines so as to increase the ability of the roller to shed mud that may have dried onto it.

A second aspect of the invention extends to a trailer manoeuvring machine comprising a drive roller of the first aspect of the invention, and means for mounting the roller on a trailer, for moving the roller selectably into and out of frictional engagement with a tyre tread of the trailer, and for rotating the roller about its axis.

A third aspect of the invention extends to a trailer (such as a caravan, boat trailer or general-purpose trailer) having a trailer manoeuvring machine of the second aspect of the invention.

A specific embodiment of the present invention will now be described, purely by way of example, with reference to the accompanying drawings, in which:
- Figure 1: is a side view of a drive roller;
- Figures 2 & 3: are views from opposite ends of the drive roller;
- Figure 4: is a sectioned view, taken on the section line 4-4 shown in Figure 1;
- Figure 5: is a sectioned view, taken on the section line 5-5 shown in Figure 2;
- Figure 6: is a sectioned plan view of the drive roller and part of a mounting arrangement for it; and
- Figures 7 & 8: are side views of the arrangement shown in Figure 6 before and after engagement of the drive roller with a tyre.

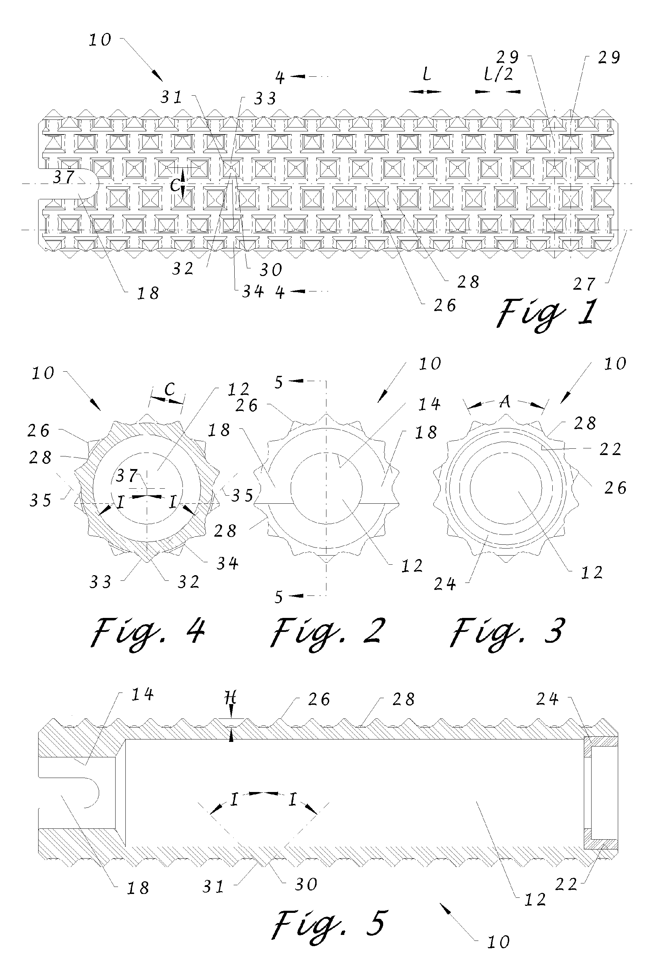

Referring in particular to Figures 1 to 5 of the drawings, a drive roller 10 is cast from aluminium alloy. It has a length of about 160 mm and a general diameter of about 40 mm. A hole 12 extends axially through the roller 10. One end portion 14 of the hole 12 is smaller in diameter and machined to receive a drive shaft 16. A transverse, open-ended slot 18 for receiving a transverse drive pin 20 extends across the end portion 14. The other end portion 22 of the hole 12 is larger in diameter and machined to receive a bearing cup 24 with an interference fit.

The peripheral surface of the roller 10 is formed with a regular array of integrally-cast protrusions 26. The protrusions 26 are arranged in lines 27 extending longitudinally of the roller 10 with a linear pitch L of about 18 mm between adjacent protrusions 26 in the same line 27. The protrusions 26 in one line 27 are longitudinally offset from the protrusions 26 in the immediately adjacent lines 27 by half that pitch, L/2, i.e. about 9 mm. Accordingly, the protrusions are also arranged in rings 29 around the roller 10. Each ring 29 has seven of the protrusions 26 so that the angular pitch A of the protrusions 26 in each ring 29 is about 51.4 degrees. Therefore, the linear pitch C in the circumferential direction between the apex of one protrusion 26 and the apices of the immediately adjacent protrusions 26 in the immediately adjacent rings 29 is about 9 mm, as viewed in the axial direction of the roller 10.

Each protrusion 26 generally has the form of a square-based pyramid that rises to a height H of about 2.4 mm above a circularly-cylindrical base surface 28 of the roller 10. The facets 30-33 of the pyramidal protrusions 26 rise at an inclination I of about 45 degrees and are aligned with the roller 10 so that one opposite pair 30,31 of the facets face in opposite directions along the roller 10 (see Figure 5), and the other opposite pair 32,33 face in opposite directions around the roller 10, i.e. with their planes 35 oppositely inclined with respect to each other but both parallel to the roller axis 37 (see Figure 4). Each pyramidal protrusion 26 has a slightly enlarged plinth portion 34. The base of each pyramidal protrusion 26 measures about 6 x 6 mm, to 7 x 7 mm, square. The apex of each pyramidal protrusion 26 is blunted.

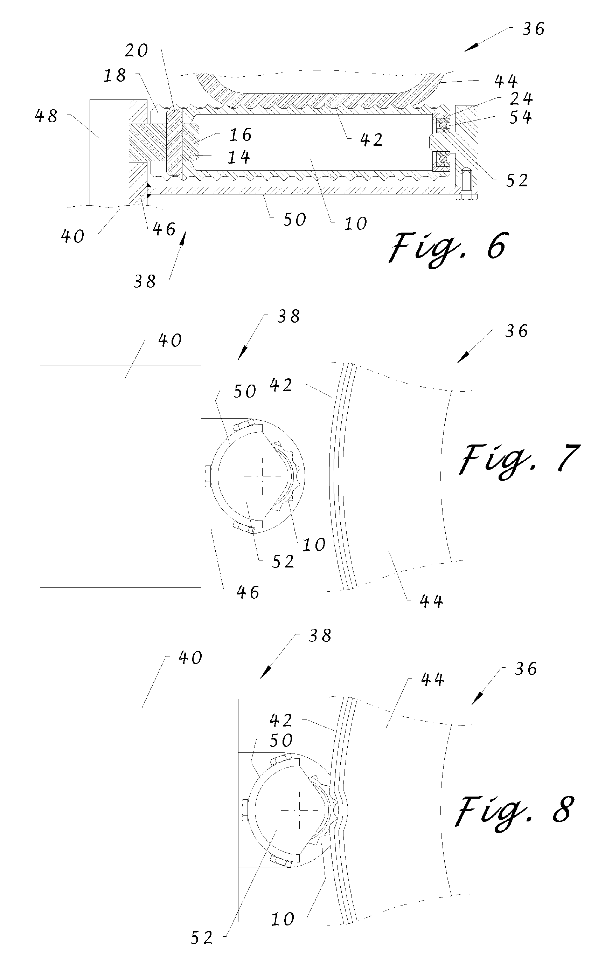

Referring now also to Figures 6 to 8, a caravan or other trailer having a pair of wheels 36 is fitted with a respective motorised drive unit 38 adjacent each wheel 36. Each drive unit 38 includes a drive roller 10 as described above and an arrangement 40 (shown schematically in Figures 6 to 8 and known *per se*) for (i) mounting the roller 10 on the trailer chassis parallel to the axis of the wheel 36, (ii) moving the drive roller 10 selectably into frictional engagement (Figure 8) and out of engagement (Figure 7) with the tread 42 of a tyre 44 on the wheel 36, and (iii) rotating the roller 10 about its axis in forward and rearward directions. When in the engaged position of Figure 8, the drive unit 38 can therefore rotate the wheel 36 so that that side of the trailer moves forwards or backwards. By controlling the relative rotations of the drive rollers 10 of the two drive units 38, it is therefore possible, in a manner known *per se,* to move the trailer forwards or backwards in a straight line, forwards or backwards in a turn to the right or left, and to perform a spin turn of the trailer in either direction about its centre.

The arrangement 40 includes a plate 46 at one end of the roller 10 and a drive shaft 16 that projects through the plate 46 from a transmission box 48. The drive shaft 16 engages in the end portion 14 of the hole 12 in the roller 10 and has a transverse drive pin 20 that engages in the slot 18 at that end of the roller 10. A semi-cylindrical support and guard 50 is cantilevered from the plate 46 and extends alongside the roller 10. At the distal end of the support and guard 50, an end plate 52 covers the other end of the roller 10 and carries a bearing 54 that is fitted into the bearing cup 24 in that end of the roller 10.

The drive units 38 are used in a conventional manner.

Various modifications and developments may be made to the drive roller 10 described above. It may be cast in other metals, such as stainless steel. The protrusions 26 may be machined, rather than cast. The roller 10 may be moulded in plastics material, which is preferably reinforced. Other manners of mounting the roller 10 and transmitting drive to it may be employed. Other shapes, patterns and sizes may be employed for the protrusions 26.

It should be noted that the embodiment of the invention has been described above purely by way of example and that many other modifications and developments may be made thereto within the scope of the present invention.

## Claims

1. A drive roller (10) for a trailer manoeuvring machine (38), the drive roller being generally cylindrical and having means (14,18,22) to enable the roller to be supported in engagement with a tyre tread (42) of a wheel (36) of a trailer and to be rotated about its axis so that frictional engagement between the roller and tread causes the wheel to rotate, the roller having its peripheral surface formed with an array of protrusions (26) spaced apart along and around the roller, at least about half of the protrusions each having a facet (32) that generally lies in a respective plane (35) parallel to the roller axis (37).

2. A drive roller as claimed in claim 1, wherein substantially all of the protrusions each have such a facet that generally lies in such a respective plane parallel to the roller axis.

3. A drive roller as claimed in claim 1 or 2, wherein at least about half of the protrusions each have a facet (33) that generally lies in a respective oppositely-inclined plane (35) parallel to the roller axis.

4. A drive roller as claimed in claim 3, wherein substantially all of the protrusions each have such a facet that generally lies in a respective oppositely-inclined plane parallel to the roller axis.

5. A drive roller as claimed in any preceding claim, wherein each of at least a majority of the protrusions is generally in the form of a rectangularly-based pyramid.

6. A drive roller as claimed in claim 5, wherein the base of each of at least a majority of the pyramids measures at least about 5 mm x 5 mm.

7. A drive roller as claimed in claim 5 or 6, wherein the base of each of at least a majority of the pyramids measures no more than about 8 mm x 8 mm.

8. A drive roller as claimed in any of claims 5 to 7, wherein the facets of each pyramid are inclined at an angle (I) of about 45 degrees to the pyramidal axis.

9. A drive roller as claimed in any preceding claim, wherein each of at least a majority of the protrusions rises to a height (H) of at least about 2 mm above a circularly-cylindrical base surface (28) of the roller.

10. A drive roller as claimed in any preceding claim, wherein each of at least a majority of the protrusions rises to a height of no more than about 3.5 mm above a circularly-cylindrical base surface of the roller.

11. A drive roller as claimed in any preceding claim, wherein the protrusions form a regular array.

12. A drive roller as claimed in any preceding claim, wherein the protrusions are arranged in lines (27) parallel to the roller axis.

13. A drive roller as claimed in claim 12, wherein the protrusions in each line are staggered with respect to the protrusions in the immediately adjacent lines.

14. A trailer manoeuvring machine (38) comprising a drive roller as claimed in any preceding claim, and means (40) for mounting the roller on a trailer, for moving the roller selectably into and out of frictional engagement with a tyre tread (42) of the trailer, and for rotating the roller about its axis.

15. A trailer having a trailer manoeuvring machine as claimed in claim 14.
